## Europäisches Patentamt

## European Patent Office

## Office européen des brevets

(19)

(11) Veröffentlichungsnummer: **0 059 898**
A2

# EUROPÄISCHE PATENTANMELDUNG

(21) Anmeldenummer: 82101476.8

(22) Anmeldetag: 26.02.82

(51) Int. Cl.³: **F 24 D 3/00**
F 24 D 19/10, F 28 D 21/00

(30) Priorität: 04.03.81 DE 3108086

(43) Veröffentlichungstag der Anmeldung:
15.09.82 Patentblatt 82/37

(84) Benannte Vertragsstaaten:
AT BE CH FR GB IT LI LU NL SE

(71) Anmelder: Babberger, Peter
Schwalbenweg 1
D-7238 Oberndorf/Boll(DE)

(72) Erfinder: Babberger, Peter
Schwalbenweg 1
D-7238 Oberndorf/Boll(DE)

(74) Vertreter: Neymeyer, Franz
Haselweg 20
D-7730 Villingen 24(DE)

(54) **Arbeitsverfahren zum Betreiben einer mit einem separaten Rauchgas-Wärmeaustauscher versehenen Warmwasserheizungsanlage.**

(57) Ein Arbeitsverfahren zum Betrieb einer Warmwasserheizungsanlage, die mit einem ausserhalb des Warmwasserkessels (1) im Rauchgasabzug zwischen dem von einem Öl- oder Gas-brenner (2) beheizten Warmwasserkessel (1) und dem Kamin angeordneten Rauchgas-Wärmeaustauscher (6) versehen ist. Zur Erzielung einer wesentlich höheren Einergieeinsparung wird mittels einer temperatur- oder zeitabhängig arbeitenden Steuerung (25) einerseits der Wasseraustausch zwischen dem Warmwasserkessel (1) und dem Wärmeaustauscher (6) während der einzelnen, jeweils zu einem Aufheizzyklus gehörenden Aufheizphasen unterbunden, und andererseits wird während des auf jede Aufheizphase folgenden Wärmeaustausches der Brenner (2) abgeschaltet. Ausserdem ist eine Rauchgasabzugsklappe (15) im Wärmeaustauscher (6) vorgesehen, die nur während der Aufheizphasen geöffnet ist. Zur Steuerung des Wasseraustausches ist ein Drei-Wege-Umschaltventil (20) vorgesehen, mit dem abwechselnd die Rücklaufleitung (4) des Heizungssystems und die eine Verbindungsleitung (17) des Wärmeaustauschers (6) mit dem Warmwasserkessel (1) verbindbar ist. Für einen schnellen Wasseraustausch ist eine Förderpumpe (5) vorgesehen. Das Abschalten des Brenners (2) am Ende einer Aufheizphase erfolgt jeweils bei Erreichen eines vorbestimmten oberen Temperaturgrenzwertes im Wärmeaustauscher, und das Abschalten des Wasseraustausches erfolgt bei Erreichen gleicher Temperaturen im Warmwasserkessel (1) und im Wärmeaustauscher (6).

Fig. 4

Patentansprüche

1. Arbeitsverfahren zum Betreiben einer Warmwasserheizungsanlage, insbesondere einer Niederdruck-Warmwasserheizungsanlage, die mit einem ausserhalb des Warmwasserkessels
im Rauchabzug zwischen dem durch einen temperaturgesteuerten Brenner aufheizbaren Warmwasserkessel und
einem Kamin angeordneten Rauchgas-Wärmeaustauscher,
welcher Rauchgas-Wärmeaustauscher aus einem Wasserbehälter besteht, der von einer Vielzahl von Heizrohren
durchzogen ist, durch welche die im Flammraum des Warmwasserkessels erzeugten heißen Rauchgase hindurchgeleitet werden, um an das Wasser des Wasserbehälters zusätzliche Wärme abzugeben, und wobei der Wasserbehälter
des Rauchgas-Wärmeaustauschers durch eine Zulauf- und
eine Rücklaufleitung mit dem Warmwasserkessel in Verbindung steht, dadurch gekennzeichnet, daß der Wasseraustausch zwischen dem Rauchgas-Wärmeaustauscher (6) und
dem Warmwasserkessel (1) zeitlich auf solche Phasen beschränkt wird, während welcher das Wasser im Rauchgas-
Wärmeaustauscher (6) eine höhere Temperatur besitzt als
das Kesselwasser und daß die einzelnen Wasseraustauschphasen jeweils bei Erreichen einer bestimmten oberen
Wasser-Grenztemperatur im Rauchgas-Wärmeaustauscher (6)
eingeleitet werden.

2. Arbeitsverfahren nach Anspruch 1, dadurch gekennzeichnet,
daß bei Heizungsanlagen mit Öl- oder Gasbrennern (2) einerseits der Wasseraustausch zwischen dem Rauchgas-Wärmeaustauscher (6) und dem Warmwasserkessel (1) während der Aufheizphasen unterbunden wird, und daß andererseits während des auf jede Aufheizphase folgenden zumindest annähernd vollständigen Wasseraustausches der Brenner (2) abgeschaltet wird.

3. Arbeitsverfahren nach Anspruch 2, dadurch gekennzeichnet, daß während des jeweils auf eine Aufheizphase folgenden zwischen dem Wasserbehälter (7) des Rauchgas-Wärmeaustauschers (6) und dem Wasserkessel (1) stattfindenden Wasseraustausches eine sich unmittelbar hinter dem Wärmeaustauscher (6) im Rauchgasabzugsrohr (Rohrstutzen 13) befindliche Rauchgasklappe (15) bis zur nächstfolgenden Aufheizphase in Schließstellung gehalten wird.

4. Arbeitsverfahren nach den Ansprüchen 1 oder 2 und 3, dadurch gekennzeichnet, daß während des zwischen dem Wasserbehälter (7) des Rauchgas-Wärmeaustauschers (6) und dem Wasserkessel (1) stattfindenden Wasseraustausches der Wasserkreislauf zwischen dem Warmwasserkessel (1) und den von diesem gespeisten Heizkörpern der gesamten Heizungsanlage unterbrochen wird.

5. Arbeitsverfahren nach den Ansprüchen 2, 3 oder 4, dadurch gekennzeichnet, daß Anfang und Ende der einzelnen Aufheizphasen sowie Anfang und Ende des Wasseraustausches zwischen dem Wasserbehälter (7) des Rauchgas-Wärmeaustauschers (6) und dem Warmwasserkessel (1) in Abhängigkeit von den jeweils im Warmwasserkessel (1) einerseits und im Rauchgas-Wärmeaustauscher (6) andererseits herrschenden Wassertemperaturen in folgender Weise bestimmt werden.

    a) Das erste Einsschalten des Brenners (2) am Anfang eines aus mehreren Heizphasen bestehenden Heizzyklus erfolgt in bekannter Weise durch einen Kesselthermostaten (24/28) bei Erreichen einer bestimmten einstellbaren unteren Grenztemperatur des Kesselwassers;

    b) Das erste Abschalten des Brenners (2) innerhalb eines begonnenen Heizzyklus erfolgt mit dem gleichzeitigen Einschalten des Wasseraustausches zwischen dem Rauchgas-Wärmeaustauscher (6) und dem Warmwasserkessel (1) durch einen Temperaturfühlerschalter (25/26) bei Erreichen einer bestimmten oberen Grenztemperatur des Wassers im Rauchgas-Wärmeaustauscher (6);

    c) Das Abschalten des Wasseraustausches und das gleichzeitige Wiedereinschalten des Brenners (2) erfolgt durch eine Temperaturvergleichsschaltung (25) bei Erreichen gleicher Wassertemperaturen im Warmwasserkessel (1) und im Rauchgas-Wärmeaustauscher (6);

    d) Sobald nach Ablauf mehrerer Aufheiz- und Wasseraustauschphasen die Kesselwassertemperatur einen eingestellten oberen Grenzwert erreicht oder überschritten hat, verhindert die Thermostatsteuerung (24/28) ein Wiedereinschalten des Brenners am Ende des letzten vollständigen Wasseraustausches.

6. Arbeitsverfahren nach den Ansprüchen 2, 3 oder 4, dadurch gekennzeichnet, daß die Laufdauer der einzelnen Aufheizphasen und der jeweils darauffolgenden Wasseraustauschphasen durch Zeitschalter mit konstant eingestellten Laufzeiten bestimmt wird.

7. Rauchgas-Wärmeaustauscher für eine Warmwasserheizungsanlage zur Durchführung des Arbeitsverfahrens nach den Ansprüchen 1 oder 2 bis 6, gekennzeichnet durch folgende Merkmale:

   a) Der in an sich bekannter Weise aus einem länglichen, zylindrischen Wasserbehälter (7) bestehende, mit einem wärmeisolierenden Mantel (23) und im Innern mit einer Vielzahl von achsparallelen Heizrohren (8) durchzogene Rauchgas-Wärmeaustauscher (6) besitzt an beiden Stirnseiten jeweils ein lösbar an einer Stirnwand (9, 10) befestigtes, kegelstumpfartig ausgebildetes und mit einem zylindrischen Rohrstutzen (13 bzw. 14) versehenes Anschlußstück (11, 12);

   b) Der Rauchgas-Wärmeaustauscher (6) ist ausserhalb des Heizkessels als Zwischenstück in das vom Heizkessel zum Kamin führende Rauchgasabzugsrohr eingesetzt;

8. Rauchgas-Wärmeaustauscher nach Anspruch 7, dadurch gekennzeichnet, daß sich in wenigstens einer der beiden zwischen dem Wasserbehälter (7) und dem Warmwasserkessel (1) vor-

handenen Verbindungsleitungen (17, 18) ein ferngesteuertes Ventil (20) sowie eine Förderpumpe (5) befinden, und daß zur Steuerung des Ventils (20) einerseits und des Brenners (2) andererseits eine elektrische oder elektronische Steuerschaltung (25) vorgesehen ist, welche in Abhängigkeit von den einerseits im Wasserbehälter (7) und andererseits im Warmwasserkessel (1) herrschenden Wassertemperaturen oder zeitabhängig das Öffnen und Schließen des Ventils (20) sowie das Einschalten und Ausschalten des Brenners (2) bewirkt.

9. Rauchgas-Wärmeaustauscher nach den Ansprüchen 7 und 8, dadurch gekennzeichnet, daß im stromaufwärtsliegenden Rohrstutzen (13) des Rauchgas-Wärmeaustauschers (6) eine fernsteuerbare Rauchgasklappe (15) angeordnet ist, die jeweils gleichzeitig mit dem Einschalten des Brenners (2) geöffnet und mit dessen Ausschalten geschlossen wird.

10. Rauchgas-Wärmeaustauscher nach Anspruch 8, dadurch gekennzeichnet, daß in einer der beiden den Rauchgas-Wärmeaustauscher (6) mit dem Warmwasserkessel (1) verbindenden Verbindungsleitungen (17, 18) ein ferngesteuertes Drei-Wege-Umschaltventil (20) angeordnet ist, an welches auch die Vor- oder Rücklaufleitung (3 bzw. 4) der Heizungsanlage angeschlossen ist und durch welches abwechselnd entweder der Heizungskreislauf oder der Wasseraustausch zwischen dem Wärmeaustauscher (6) und dem Warmwasserkessel (1) herstellbar bzw. unterbrechbar ist.

0059898

11. Rauchgas-Wärmeaustauscher nach den Ansprüchen 7 bis 10, dadurch gekennzeichnet, daß das Fassungsvolumen seines Wasserbehälters (7) etwa ein Zwanzigstel des Fassungsvolumens des Warmwasserkessels (1) beträgt.

12. Rauchgas-Wärmeaustauscher nach Anspruch 7, dadurch gekennzeichnet, daß die Summe der Hohlraumquerschnitte der den Wasserbehälter (7) durchsetzenden Heizrohre (8) zumindest annähernd gleich groß ist wie der Hohlraumquerschnitt eines Rohrstutzens (13, 14).

Anm.: Peter Babberger, 7238 Oberndorf-Boll Bundesrepublik Deutschland

Titel: Arbeitsverfahren zum Betreiben einer mit einem
separaten Rauchgas-Wärmeaustauscher versehenen Warmwasserheizungsanlage.

Die Erfindung betrifft ein Arbeitsverfahren zum Betreiben
einer Warmwasserheizungsanlage, insbesondere einer
Niederdruck-Warmwasserheizungsanlage, die mit einem ausserhalb des Warmwasserkessels im Rauchabzug zwischen dem
durch einen temperaturgesteuerten Brenner aufheizbaren
Warmwasserkessel und einem Kamin angeordneten Rauchgas-
Wärmeaustauscher, welcher Rauchgas-Wärmeaustauscher aus
einem Wasserbehälter besteht, der von einer Vielzahl von
Heizrohren durchzogen ist, durch welche die im Flammraum
des Warmwasserkessels erzeugten heißen Rauchgase hindurchgeleitet werden, um an das Wasser des Wasserbehälters zusätzliche Wärme abzugeben, und wobei der Wasserbehälter
des Rauchgas-Wärmeaustauschers durch eine Zulauf- und eine
Rücklaufleitung mit dem Warmwasserkessel in Verbindung
steht. Ausserdem betrifft die Erfindung einen Rauchgas-
Wärmeaustauscher zur Durchführung des Arbeitsverfahrens.

Die Verwendung sogenannter Rauchgasvorwärmer mit Heizröhren bzw. sogenannter Ekonomiser sind seit langem bekannt
(DE-PS 209 460, DE-OS 27 06 207). Sie werden dazu benutzt,
den heissen, in einem Brennraum erzeugten Rauchgasen zusätzlich Wärme zu entziehen und diese Wärme an Wasser,
das zu Heizzwecken verwendet wird, abzugeben. Dadurch wird
eine Verbesserung des Wirkungsgrades von Öfen oder Heizungsanlagen erzielt.

Es sind auch bereits Großwasserraumkessel bekannt, die aus
einem Langkessel mit mehreren Rauchgaszügen und einer oder
mehreren Rauchgaswendekammern sowie einem oder mehreren
im Großwasserraumkessel angeordneten Ekonomiser-Rohrbündeln
bestehen, bei denen also die Ekonomiser im Großwasserraumkessel integriert sind (DE-OS 27 04 233), als auch solche
Großwasserraumkessel, bei denen sogenannte Nachschaltheizflächenblöcke in geringem Abstand über, unter, oder seitlich
des Großwasserraumkessels angeordnet sind (DE-OS 27 06 207).

Bei diesen bekannten Wärmeaustauschern findet ein dauernder
Wasseraustausch zwischen dem Wasserbehälter des Wärmeaustauschers und dem Heizkessel statt. Ein guter Wärmeaustausch
zwischen den heissen Rauchgasen und dem Wasser des Wärmeaustauschers wird ausschließlich durch eine möglichst hohe
Rauchgasgeschwindigkeit im Wärmeaustauscher zu erzielen
versucht. Einen guten Wirkungsgrad läßt sich dabei aber nur
dann erzielen, wenn zugleich eine große Berührungsfläche, d. h. Wärmeübergangsfläche vorhanden ist, und das schnell strömende Rauchgas einen möglichst langen Weg innerhalb des Wärmeaustauschers zurückzulegen hat. Letzteres jedoch ist nur erreichbar, durch eine sehr langgestreckte Bauweise des Wärmeaustauschers
oder durch eine gewundene bzw. gewendelte Führung der Rauchgasrohre durch den Wärmeaustauscher.

Der Erfindung liegt die Aufgabe zugrunde, ein Arbeitsverfahren
der eingangs genannten Art zum Betreiben einer Warmwasserheizungsanlage, insbesondere einer Niederdruck-Warmwasserheizungsanlage mit einem ausserhalb des Wasserkessels angeordneten
Rauchgas-Wärmeaustauschers, der möglichst einfach und raumsparend
gebaut sein soll, der nachträglich in vorhandene Heizungsanlagen,
insbesondere von Wohnhäusern installierbar sein soll, anzugeben,
mit dem eine effektiv hohe Energieersparnis bzw. Wirkungsgradverbesserung erzielbar ist.

Gelöst wird diese Aufgabe erfindungsgemäß dadurch, daß der Wasseraustausch zwischen dem Rauchgas-Wärmeaustauscher und dem Warmwasserkessel zeitlich auf solche Phasen beschränkt wird, in
welchem das Wasser im Rauchgas-Wärmeaustauscher eine merklich
höhere Temperatur besitzt als das Kesselwasser, und daß die
einzelnen Wasseraustauschphasen jeweils bei Erreichen einer bestimmten einstellbaren oberen Grenztemperatur im Rauchgas-Wärmeaustauscher eingeleitet werden.

Dieses Arbeitsverfahren läßt sich sowohl bei Heizungsanlagen mit
Öl- oder Gasbrennern als auch bei Heizungsanlagen, in denen feste
Brennstoffe verbrannt werden, in vorteilhafter Weise anwenden,
wobei sich jeweils mit verhältnismäßig geringem Aufwand und einem einfach aufgebauten sowie leicht installierbaren Wärmeaustauscher eine merklich höhere Energieersparnis erzielen läßt, als bei den bekannten Einrichtungen. Die erzielbare Verbesserung des Wirkungsgrades bzw. Erhöhung der Energieersparnis beruht dabei im wesentlichen auf der Erfahrung, daß ein Wärmeübergang von den heißen Rauchgasen auf das im Wärmeaustauscher befindliche Wasser dann schneller und effektiver vonstatten geht, wenn der Temperaturunterschied zwischen dem Rauchgas und dem aufzuwärmenden Wasser möglichst groß ist, sowie darauf, daß es von Vorteil ist, wenn der Wasseraustausch zwischen dem Wärmeaustauscher und dem Warmwasserkessel nicht schleichend, sondern in kurzer Zeit möglichst vollständig stattfindet, so daß die im Wärmeaustauscher aufgenommene und gespeicherte Wärmeenergie jeweils vollständig in den Warmwasserkessel übertragen wird.

Bei Heizungsanlagen, die mit Gas- oder Ölbrennern ausgerüstet sind läßt sich die größte Wirkungsgradverbesserung bzw. die größte Energieersparnis dadurch erzielen, daß einerseits der Wasseraustausch zwischen dem Rauchgas-Wärmeaustauscher und dem Warmwasserkessel während der Aufheizungsphasen unterbunden wird und daß andererseits während des auf jede Aufheizphase folgenden zumindest annähernd vollständigen Wasseraustausches der Brenner abgeschaltet wird.

Eine zusätzliche Verbesserung des Wirkungsgrades bzw. eine zusätzliche Verringerung des Energieverlustes läßt sich dadurch erzielen, daß während des jeweils auf eine Aufheizphase folgenden zwischen dem Wasserbehälter des Rauchgas-Wärmeaustauschers und dem Wasserkessel stattfindenden Wasseraustausches eine sich unmittelbar hinter dem Wärmeaustauscher im Rauchgasabzugsrohr befindliche Rauchgasklappe bis zur nächstfolgenden Aufheizphase in Schließstellung gehalten wird.
Dadurch kann nämlich, was ansich bekannt ist, den durch einen
natürlichen Kaminzug verursachten Wärmeabfluß durch den Kamin
weitgehend verhindern, wenn der Brenner abgeschaltet ist.
Ohne eine solche Rauchgasklappe wird sowohl durch den Flammraum des Kessels als auch durch die Rauchzugrohre des Wärmeaustauschers Kaltluft gezogen, die sowohl den Kesselwänden
als auch dem Wärmeaustauscher Wärme entziehen würde.

Vorteilhaft ist es bei dem erfindungsgemäßen Arbeitsverfahren
auch, wenn während des zwischen dem Wasserbehälter des Rauchgas-Wärmeaustauschers und dem Wasserkessel stattfindenden
Wärmeaustausches der Wasserkreislauf zwischen dem Wasserkessel und den von diesem gespeisten Heizkörpern der gesamten
Heizungsanlage unterbrochen wird, weil dadurch eine intensivere und konzentriertere Übertragung der im Wärmeaustauscher
gespeicherten Wärme in den Wasserkessel stattfinden kann.

Das erfindungsgemäße Arbeitsverfahren ist weiterhin dadurch
gekennzeichnet, daß Anfang und Ende der einzelnen Heizphasen
sowie Anfang und Ende des Wasseraustausches zwischen dem
Wasserbehälter des Rauchgas-Wärmeaustauschers und dem Wasserkessel in Abhängigkeit von den jeweils im Wasserkessel einerseits und im Rauchgas-Wärmeaustauscher andererseits herrschenden Wassertemperaturen in folgender Weise bestimmt werden:

a) Das erste Einschalten des Brenners am Anfang eines aus mehreren Heizphasen bestehenden Heizzyklus erfolgt in bekannter Weise durch einen Kesselthermostaten bei Erreichen einer bestimmten einstellbaren, unteren Grenztemperatur des Kesselwassers.

b) Das erste Abschalten des Brenners innerhalb eines begonnenen Heizzyklus erfolgt mit dem gleichzeitigen Einschalten des Wasseraustausches zwischen dem Rauchgas-Wärmeaustauscher und dem Wasserkessel durch einen Temperaturfühlerschalter bei Erreichen einer bestimmten oberen Grenztemperatur des Wassers im Rauchgas-Wärmeaustauscher.

c) Das Abschalten des Wasseraustausches$^X$und das gleichzeitige Wiedereinschalten des Brenners erfolgt durch eine Temperaturvergleichsschaltung bei Erreichen gleicher Wassertemperaturen im Heizkessel und im Rauchgas-Wärmeaustauscher.

d) Sobald nach Ablauf mehrerer Heiz- und Wasseraustauschphasen die Kesselwassertemperatur einen eingestellten oberen Grenzwert erreicht oder überschritten hat, verhindert ein weiterer Thermostat des Warmwasserkessels ein Wiedereinschalten des Brenners am Ende des letzten vollständigen Wasseraustausches.

Statt einer temperaturabhängigen Steuerung ist es auch möglich, die Heizphasen und die Wasseraustauschphasen mittels eines Zeitschalters zu steuern, wobei es allerdings zweckmäßig und vorteilhaft ist, die jeweilige Einschaltdauer des Brenners sowie die zeitliche Länge der Austauschphasen entsprechend einer gedachten temperaturabhängigen Steuerung empirisch ermittelt und entsprechend einstellt.

Es ist klar, daß die Dauer einer einzelnen Aufheizphase, während welcher das sich im Wärmeaustauscher befindliche Wasser auf eine bestimmte obere Grenztemperatur erwärmen soll, sowohl von der Größe der Wassermenge, d. h. vom Fassungsvermögen des Wärmeaustauschers abhängig ist, als auch von der jeweiligen Ausgangstemperatur, bei welcher die Aufheizphase jeweils beginnt. Dadurch ergeben sich innerhalb eines Aufheizzyklus verschiedenlange Aufheizphasen, da jede neue Aufheizphase mit einer höheren Ausgangstemperatur beginnt, so daß die Länge der einzelnen innerhalb eines Aufheizzyklus aufeinander folgenden Aufheizphasen zunehmend geringer wird, wenn man davon ausgeht, daß eine bestimmte obere Grenztemperatur, die knapp unter dem Siedepunkt liegen soll, im Wärmeaustauscher nicht überschritten werden soll.

Um diese Bedingung zu erfüllen ist es möglich eine elektronische Zeitsteuerung für die einzelnen Aufheizphasen zu verwenden, welche die aufeinander folgenden Aufheizphasen innerhalb eines Aufheizzyklus zunehmend kürzer werden läßt. Eine andere einfachere Möglichkeit besteht darin, den oberen Temperaturgrenzwert des Wärmeaustauschers bzw. die sich daraus empirisch ergebende Dauer der einzelnen Aufheizphasen eines Zyklus so niedrig anzusetzen, daß ein Überschreiten bzw. Erreichen der Siedetemperatur im Wärmeaustauscher mit Sicherheit vermieden wird. Dies ist ohne weiteres möglich, weil nämlich die obere Grenzwerttemperatur im Kessel bei maximal 75° angesetzt werden kann, so daß für die obere Grenzwerttemperatur im Wärmeaustauscher ein Spielraum von ca. 25 Wärmegraden besteht. Nur der Vollständigkeithalber sei noch darauf hingewiesen, daß die Siedetemperatur naturgemäß auch von dem Betriebsdruck im gesamten Heizungssystem abhängig ist.

Der erfindungsgemäße Rauchgas-Wärmeaustauscher für eine Warmwasserheizungsanlage zur Durchführung des erfindungsgemäßen Arbeitsverfahrens ist durch folgende Merkmale gekennzeichnet:

a) Der in ansich bekannter Weise aus einem länglichen, zylindrischen Wasserbehälter bestehende und mit einem wärmeisolierenden Mantel und im Innern mit einer Vielzahl von achsparallelen Heizrohren durchzogene Rauchgas-Wärmeaustauscher, besitzt an beiden Stirnseiten jeweils ein lösbar an einer Stirnwand befestigtes, kegelstumpfartig ausgebildetes und mit einem zylindrischen Rohrstutzen versehenes Anschlußstück.

b) Der Rauchgas-Wärmeaustauscher ist ausserhalb des Heizkessels als Zwischenstück in das vom Heizkessel

zum Kamin führende Rauchabzugsrohr eingesetzt.
Dadurch ist einerseits eine verhältnismäß einfache,
kostengünstige und raumsparende Bauweise gegeben,
sowie eine einfache Installation möglich, und der
Wärmeaustauscher läßt sich auch verhältnismäß einfach zum Zwecke der Reinigung demontieren, wobei es
genügt, wenn eines der beiden Anschlußstücke demontiert
wird, damit die vom Rauchgas durchströmten Heizrohre
von einer Stirnseite her zugänglich gemacht werden.

Weiterhin ist der Rauchgas-Wärmeaustauscher durch
folgende Merkmale gekennzeichnet:

c) In wenigstens einer der beiden zwischen dem Wasserbehälter und dem Wasserkessel vorhandenen Verbindungsleitungen befindet sich ein ferngesteuertes Ventil
sowie eine Förderpumpe.

d) Zur Steuerung des Ventils einerseits und des Brenners
andererseits ist eine elektrische oder elektronische
Steuerschaltung vorgesehen, welche in Abhängigkeit
von den einerseits im Wasserbehälter und andererseits
im Wasserkessel herrschenden Wassertemperaturen oder
zeitabhängig das Öffnen und Schließen des Ventils
sowie das Ein- und Ausschalten des Brenners bewirkt.

Ausserdem ist im stromaufwärts liegenden Rohrstutzen des Rauchgas-Wärmeaustauschers eine fernsteuerbare Rauchgasklappe angeordnet, die jeweils gleichzeitig mit dem Einschalten des Brenners geöffnet und mit dessen Ausschalten geschlossen
wird.

Um mit einfachen und funktionssicheren Mitteln einerseits
den Wasseraustausch zwischen dem Wärmeaustauscher und dem
Wasserkessel durchführen zu können und andererseits
während dessen zugleich den Wasserkreislauf innerhalb des
gesamten Heizungssystems unterbrechen zu können, ist in
einer der beiden den Rauchgas-Wärmeaustauscher mit dem
Wasserkessel verbindenden Verbindungsleitungen ein ferngesteuertes Drei-Wege-Umschaltventil angeordnet, an welches
auch die Vor- und Rücklaufleitung der Heizungsanlage
angeschlossen ist und durch welches abwechselnd entweder
der Heizungskreislauf oder der Wasseraustausch zwischen
dem Wärmeaustauscher und dem Warmwasserkessel herstellbar
bzw. unterbrechbar ist. Um ein günstiges Verhältnis zwischen
den Investitionskosten einerseits und der erzielbaren Energieersparnis andererseits zu erzielen, ist es erfahrungsgemäß
zweckmäßig, die Baugröße des Rauchgas-Wärmeaustauschers
so auszulegen, daß das Fassungsvolumen seines Wasserbehälters etwa ein Zwanzigstel des Fassungsvolumens des Warmwasserkessels beträgt.
Die diesbezüglichen Untersuchungen haben ergeben, daß bei
einer erzielbaren Energieeinsparung von bis zu 25 %, die
sich auf einfache Weise durch Messung der kürzeren Gesamt-
Brennereinschaltzeiten ermitteln ließen, eine vollständige
Amortisation der Investitionskosten eines solchen Rauchgas-Wärmeaustauschers unter Zugrundelegung der heutigen Heizölpreise, innerhalb von drei bis vier Jahren erzielen läßt.
Hinsichtlich einer sowohl kostenmäßig als auch räumlich
günstigen Bauform des Rauchgas-Wärmeaustauschers und eines
ausreichend guten Wärmeaustausches optimale Lösung läßt
sich dadurch erreichen, daß die Summe der Hohlraumquerschnitte der den Wasserbehälter durchsetzenden Heizrohre
zumindest annähernd gleich groß ist wie der Hohlraumquerschnitt eines Rohrstutzens.

Im folgenden wird die Erfindung anhand zweier Anwendungsbeispiele näher erläutert. Es zeigt:

Fig. 1 Schematisch eine mit einem Rauchgas-Wärmeaustauscher
versehene Heizungsanlage

Fig. 2 Den Rauchgas-Wärmeaustauscher in einem Schnitt II - II
aus Fig. 1

Fig. 3 Eine mit einem Mischventil versehene Warmwasser-
Heizungsanlage mit einem erfindungsgemäßen Rauchgas-
Wärmeaustauscher in schematischer Darstellung

Fig. 4 Ein Schalt- und Steuerungsschema für die in Fig. 1
dargestellte Heizungsanlage.

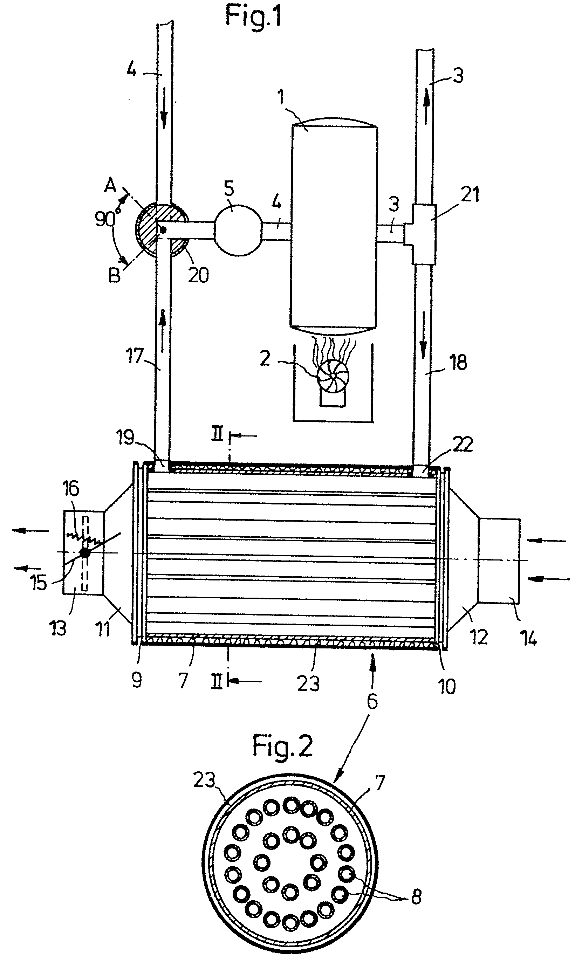

Das in Fig. 1 schematisch dargestellte Heizungssystem eines
Ein- oder Mehrfamilienhauses besteht in bekannter Weise aus
einem Heizkessel, der seinerseits einen Warmwasserkessel 1
sowie einen Ölbrenner 2 aufweist, wobei statt des Ölbrenners 2
auch ein Gasbrenner vorgesehen sein kann.

Über eine Vorlaufleitung 3 und eine Rücklaufleitung 4
ist der Warmwasserkessel 1 mit dem nicht dargestellten
hauseigenen Heizungssystem bzw. mit dessen Heizkörpern in
Form eines insich geschlossenen Kreislaufssystems verbunden.
In der Rücklaufleitung 4 befindet sich eine systemeigene
Förderpumpe 5, die häufig auch als Umwälzpumpe bezeichnet
wird, und die den Wasserumlauf im Heizungssystem aufrechterhält und deshalb dauernd eingeschaltet ist. Die vom Ölbrenner 2 erzeugten heissen Abgase werden durch ein nicht
dargestelltes Kanalsystem innerhalb des Heizkessels und
durch ein ebenfalls nicht dargestelltes Rauchgasrohr durch
einen Wärmeaustauscher 6 in den ebenfalls nicht dargestellten
Kamin geleitet. Der Wärmeaustauscher 6 besteht aus einem
zylindrischen Wasserbehälter 7, der mit einer Vielzahl von
im Durchmesser wesentlich kleineren Heizrohren 8 durchzogen,
die alle in achsparalleler Anordnung sich von der einen zur
anderen der beiden Stirnwände 9 und 10 erstrecken und jeweils in den Ebenen dieser beiden Stirnwände 9 und 10 enden
und an beiden Enden jeweils offen sind. Auf die beiden Stirnwände 9 und 10 sind jeweils lösbar befestigt kegelstumpfartig
ausgebildete Anschlußstücke 11 bzw. 12 aufgesetzt, die jeweils einen zylindrischen Rohrstutzen 13 bzw. 14 aufweisen,
durch welche der Wärmeaustauscher 6 in ein sich zwischen dem
Heizkessel und dem Kamin angeordnetes Rauchgas-Abzugsrohr
einsetzbar ist. Im ausströmseitigen Rohrstutzen 13 befindet
sich eine fernsteuerbare Rauchgasklappe 15, die mittels einer Feder 16 in Schließstellung gehalten wird, und die während der jeweiligen Einschaltzeiten des Ölbrenners 2 beispielsweise durch einen elektromagnetisch betätigten Mechanismus in die in Fig. 1 annähernd dargestellte Offen-Stellung gebracht wird.

Die Innendurchmesser und die Anzahl der Heizungsrohre 8 sind so gewählt, daß ihr Gesamtdurchlaßquerschnitt zumindest annähernd dem Durchlaßquerschnitt eines der beiden ansich gleich großen Rohrstutzen 13 und 14 entspricht. Dies hat zur Folge, daß das den Wärmeaustauscher 6 bzw. dessen Heizrohre 8 durchströmende Rauchgas innerhalb des Wärmeaustauschers weder eine Beschleunigung noch eine Verzögerung erfährt. Die Rauchgasklappe 15 bewirkt in ihrer Schließstellung eine nahezu vollständige Unterbindung des natürlichen Kaminzuges, so daß nach dem jeweiligen Abschalten des Ölbrenners 2 keine Auskühlung durch den Kaminzug erfolgen kann.

Die in der Zeichnung dargestellten Größenverhältnisse zwischen dem Warmwasserkessel 1 einerseits und dem Wärmeaustauscher 6 andererseits entsprechen nicht der Wirklichkeit. Diese sind in Wirklichkeit eher umgekehrt, nämlich so, daß das Fassungsvermögen des Wasserbehälters 7 etwa einem Zwanzigstel des Fassungsvermögens des Warmwasserkessels 1 entspricht. Um zwischen dem Warmwasserkessel 1 und dem Wasserbehälter 7 des Wärmeaustauschers 6 einen Wasseraustausch vornehmen zu können, sind zwei Verbindungsleitungen 17 und 18 vorgesehen.

- 14 -

0059898

Dabei ist die als Zulaufleitung zum Warmwasserkessel 1
dienende und an einem ausströmseitig am Wasserbehälter 7
angeordneten Anschlußstutzen 19 angeschlossene Verbindungsleitung 17 an ein Drei-Wege-Umschaltventil 20 angeschlossen,
das sich in der Rücklaufleitung 4 vor der Förderpumpe 5 befindet. Dieses Drei-Wege-Umschaltventil ist mittels eines
nicht dargestellten Elektromagneten oder Stellmotors derart
umstellbar, daß es in der einen Schaltstellung A die Verbindungsleitung 17 mit der Förderpumpe 5 und in der anderen
Schaltstellung B die Rücklaufleitung 4 mit der Förderpumpe 5
verbindet. Dadurch ist sichergestellt, daß während eines
zwischen dem Wärmeaustauscher 6 und dem Warmwasserkessel 1
stattfindenden Wasseraustausches der Wasserkreislauf im
Heizungssystem unterbrochen wird. Die andere Verbindungsleitung 18, durch welche Kesselwasser aus dem Warmwasserkessel 1 in den Wasserbehälter 7 des Wärmeaustauschers 6
gelangt, ist durch ein T-Stück 21 mit der Vorlaufleitung 3
verbunden und ausserdem durch einen in der Nähe der einströmseitigen Stirnwand 10 angeordneten Anschlußstutzen 22
an den Wasserbehälter 7 angeschlossen. Der Wasserbehälter 7
ist mit einem wärmeisolierenden Mantel 23 versehen.

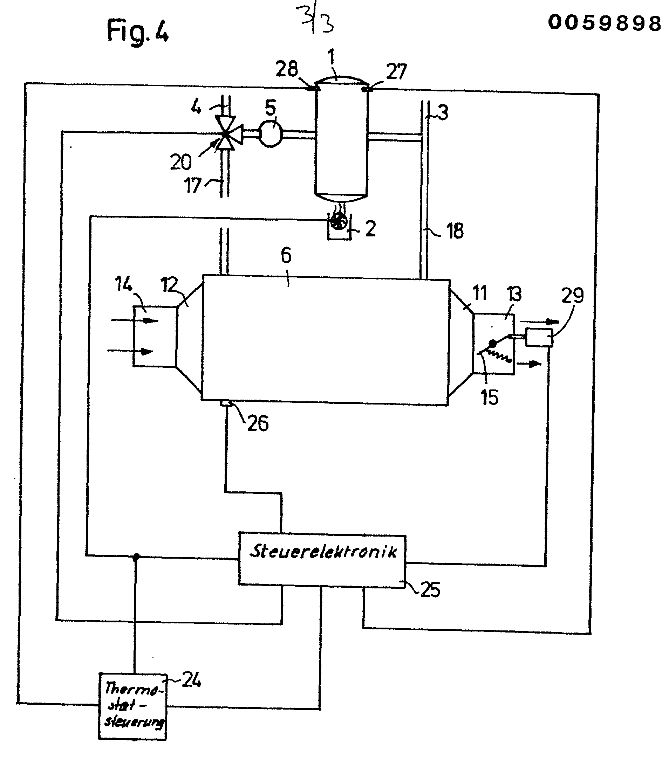

Zur Steuerung des Ölbrenners 2, des Drei-Wege-Umschaltventils 20
sowie der Rauchgasklappe 15 ist gemäß Fig. 4 zusätzlich zu
der systemeigenen Thermostatsteuerung 24 eine Steuerelektronik
25 vorgesehen, an welche ein Temperaturfühler 26 des Wärmeaustauschers 6 und ein Temperaturfühler 27 des Warmwasser-

- 15 -

kessels 1 angeschlossen sind, während die Thermostatsteuerung 24 mit einem Temperaturfühler 28 des Warmwasserkessels 1 verbunden ist. Diese Steuerung arbeitet in folgender Weise: Angenommen die Wassertemperatur des Warmwasserkessels 1 sei durch den Wärmeverbrauch des Heizsystems auf die eingestellte niedrige Grenztemperatur, die zugleich Einschalttemperatur ist, abgefallen, so wird durch die Thermostatsteuerung in bekannter Weise der Ölbrenner 2 eingeschaltet. Das Drei-Wege-Umschaltventil 20 befindet sich dabei zunächst noch in der Schaltstellung B, in welcher die Rücklaufleitung 4 mit der Förderpumpe 5 in Verbindung steht und der Heizkreislauf aufrechterhalten ist. Während der nun angelaufenen Aufheizphase wird nicht nur das Wasser im Warmwasserkessel 1 unmittelbar durch die Brennerflamme sondern auch das Wasser im Wärmeaustauscher 6 von den durchströmenden heissen Abgasen erwärmt. Da in Folge der Schaltstellung B des Drei-Wege-Umschaltventils 20 ein Wasseraustausch zwischen dem Wärmeaustauscher 6 und dem Warmwasserkessel 1 während dieser Aufheizphase nicht stattfinden kann und auch seit der letzten Austauschphase des vorhergegangenen Aufheizzyklus nicht stattgefunden hat, kann es sein, daß die Wassertemperatur im Wärmeaustauscher 6 doch wesentlich höher ist als die Wassertemperatur des Warmwasserkessels 1, so daß im Wärmeaustauscher 6 nach einer verhältnismäßig kurzen ersten Aufheizphase schon die eingestellte obere Grenztemperatur, die möglichst nahe am Siedepunkt liegen kann, erreicht wird. Sobald diese obere Grenztemperatur im Wärmeaustauscher 6 erreicht ist, und der Steuerelektronik 25 vom Temperaturfühler 26 gemeldet wird, erfolgt durch die Steuerelektronik 25 ein Abschalten des Ölbrenners 2 und ein gleichzeitiges Umschalten des Drei-Wege-Umschaltventils 20 aus der
Schaltstellung A in die Schaltstellung B, so daß zwischen
dem Wärmeaustauscher 6 und dem Warmwasserkessel 1 nun ein
Wasseraustausch stattfindet. Sobald dieser Wasseraustausch
vollständig abgeschlossen ist, was dadurch angezeigt wird,
daß die beiden Temperaturfühler 27 und 26 jeweils die gleiche
Temperatur melden, wird von der Steuerelektronik 25 der Ölbrenner 2 wieder eingeschaltet und zugleich das Dreiwege-Umschaltventil 20 von der Stellung A wieder in die Stellung B
umgeschaltet. Zugleich mit der jeweiligen Einschaltung des
Ölbrenners 2 wird auch durch einen Elektromagneten 29 die
Rauchgasklappe 15 geöffnet, die beim jeweiligen Abschalten
des Ölbrenners 2 wieder geschlossen wird.

Diese jeweils aufeinander folgenden Aufheizphasen und Wasseraustauschphasen wiederholen sich so lange, bis im Warmwasserkessel 1 eine obere Grenztemperatur erreicht wird, welche
vom Temperaturfühler 28 an die Thermostatsteuerung 24 gemeldet wird, die schließlich ein nochmaliges Wiedereinschalten
des Brenners 2 so lange verhindert, bis wieder die niedere
Grenztemperatur im Warmwasserbehälter 1 erreicht ist und ein
neuer Aufheizzyklus abzulaufen beginnt.

Wie bereits einleitend erwähnt wurde, ist es auch möglich, die Dauer der einzelnen Aufheizphasen und Wasseraustauschphasen mittels einer elektrischen oder elektronischen Zeitsteuerung zu steuern.

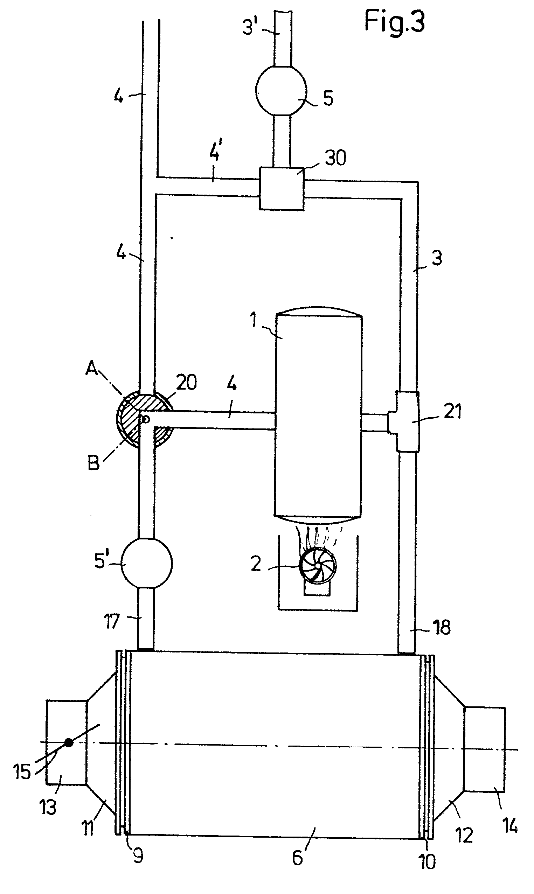

Im Unterschied zu dem Heizungssystem der Fig. 1 ist bei dem in Fig. 3 schematisch dargestellten Heizungssystem die systemeigene Förderpumpe 5 in einer von einem thermostatisch gesteuerten Mischventil 30 ausgehenden Vorlaufleitung 3' angeordnet, in welches die vom Warmwasserkessel 1 ausgehende Vorlaufleitung 3 mündet und welches andererseits durch eine Zweigleitung 4' zusätzlich mit der Rücklaufleitung 4 verbunden ist. Da in diesem Falle die systemeigene Förderpumpe 5 für den Wasseraustausch zwischen dem Wärmeaustauscher 6 und dem Warmwasserkessel 1 nicht benutzt werden kann, ist es erforderlich in der Verbindungsleitung 17 eine zusätzliche Förderpumpe 5' vorzusehen, wobei diese Förderpumpe 5' selbstverständlich auch in dem zwischen dem Dreiwege-Umschaltventil 20 und dem Warmwasserkessel 1 liegenden Leitungsstück angeordnet sein könnte, wie das bei dem Ausführungsbeispiel der Fig. 1 der Fall ist. Im übrigen stimmen die beiden in den Fig. 1 und 3 dargestellten Heizungsanlagen, insbesondere was den Wärmeaustauscher 6 und dessen Arbeitsweise betrifft, völlig überein. Der beschriebene Aufbau und auch die beschriebene Funktionsweise hat überdies den Vorteil, daß sich der Wärmeaustauscher 6 mit der zugehörigen Steuerung auch nachträglich in eine bereits vorhandene Heizungsanlage installieren läßt,ohne daß dabei komplizierte Eingriffe in das vorhandene Steuersystem erforderlich wären.

- 18 -

0059898

Versuche haben ergeben, daß durch das erfindungsgemäße Arbeitsverfahren eine zusätzliche Wirkungsgradverbesserung bzw.
Energieeinsparung von mindestens 15% erreichbar sind, während
mit dem Einsatz eines Wärmeaustauschers 6 allein ohne des
erfindungsgemäßen Austauschverfahrens lediglich eine Energieeinsparung in der Größenordnung von 5% erzielt werden kann.
Durch die erfindungsgemäße Steuerung der Rauchgasklappe 15
läßt sich zusätzlich eine Energieeinsparung von etwa 4 bis
5% erreichen, so daß gegenüber den bekannten mit Wärmeaustauschern bzw. sogenannten Ekonomisern eine reale Erhöhung
der Energieeinsparung um ca. 20% erreichbar ist.

Dadurch, daß das Fassungsvermögen d. h. der Wasserinhalt des
Rauchgas-Wärmeaustauschers 6 nur ein Zwanzigstel des Rauminhalts des Warmwasserkessels 1 beträgt, ergeben sich nicht
nur kurze Aufheizphasen und kurze Wasseraustauschphasen,
sondern auch sehr günstige Baugrößen für den Rauchgas-Wärmeaustauscher 6, so daß der Rauchgas-Wärmeaustauscher auch bei
beengten Raumverhältnissen gut installierbar ist, da er
selbst nur wenig Raum beansprucht. Auch die Herstellkosten
können dadurch niedrig gehalten werden.

Fig.1

Fig.2

0059898

1/3

Fig.3

Fig.4

3/3

0059898

Steuerelektronik

Thermo-stat-steuerung